# EUROPÄISCHE PATENTSCHRIFT

(11) **EP 1 248 980 B1**
(45) Veröffentlichungstag und Bekanntmachung des Hinweises auf die Patenterteilung: **17.09.2003**
(21) Anmeldenummer: 00990540.7
(22) Anmeldetag: 15.12.2000
(51) Int. Cl.: G06F 11/16

(54) **VERFAHREN ZUR BEREITSTELLUNG VON KONSISTENTEN EINGANGSWERTEN UND MEHRPROZESSORSYSTEM**
METHOD FOR PROVIDING CONSISTENT INPUT VALUES AND MULTIPROCESSOR SYSTEM
PROCEDE POUR LA MISE A DISPOSITION DE VALEURS D'ENTREE COHERENTES ET SYSTEME MULTIPROCESSEUR

(30) Priorität: 21.01.2000 DE 10002522
(43) Veröffentlichungstag der Anmeldung: 16.10.2002
(73) Patentinhaber: SIEMENS AKTIENGESELLSCHAFT, 80333 München (DE)
(72) Erfinder: KUCERA, Markus, 93059 Regensburg (DE); ARNOLD, Armin, 90602 Pyrbaum (DE)
(86) Internationale Anmeldenummer: DE0004486
(87) Internationale Veröffentlichungsnummer: WO01053946

(56) Entgegenhaltungen:
- EP-A- 0 935 198
- DE-A- 2 415 307
- US-A- 4 733 353
- US-A- 5 551 034
- DAVIES D ET AL: "SYNCHRONIZATION AND MATCHING IN REDUNDANT SYSTEMS" IEEE TRANSACTIONS ON COMPUTERS, IEEE INC. NEW YORK, US, Bd. C-27, Nr. 6, 1. Juni 1978 (1978-06-01), Seiten 531-539, XP002041652 ISSN: 0018-9340

## Beschreibung

Die Erfindung betrifft ein Verfahren zur Bereitstellung von konsistenten Eingangswerten und ein hierfür geeignetes Mehrprozessorsystem, insbesondere für Kraftfahrzeuge.

In Mehrprozessorsystemen, in denen synchronisierte Prozessoren redundante Berechnungen durchführen, wird anhand der Rechenergebnisse mit Mehrheitsentscheidung entschieden, ob ein Prozessor fehlerfrei arbeitet oder nicht. Ein derartiges Mehrprozessorsystem ist aus der Patentschrift US 4 733 353 bekannt. Die Vergleichbarkeit der Rechenergebnisse der Prozessoren wird stark vereinfacht, wenn den Berechnungen jeweils derselbe Startwert zugrunde liegt. In diesem Fall müssen die Rechenergebnisse exakt gleich sein.

Um zu erreichen, dass die Startwerte für die Berechnungen der Prozessoren identisch sind, können die Eingangswerte zwischen den Prozessoren ausgetauscht und ein gemeinsamer Startwert beispielsweise durch Mittelwertbildung ermittelt werden. Hierfür muss jeder Prozessor mit einem zusätzlichen Programm ausgestattet werden, das für das spezielle System angepasst ist.

Aus der Patentschrift DE 44 07 860 C1 ist ein Doppel rechnersystem mit einem betriebsführenden Wirkrechner und einem betriebsbereiten Ersatzrechner mit zwei parallelen, kommunizierenden Rechnerkanälen bekannt. Die Rechner weisen jeweils eine Vorverarbeitungseinheit auf, die eingangsseitige Zustandsdaten parallel vorverarbeiten und ihre Vorergebnisse in ihrem jeweiligen Vorspeicher ablegen. Eine Weiterverarbeitungseinrichtung des Wirkrechners schreibt ihre Endergebnisse regelmäßig auch in den Hauptspeicher des Ersatzrechners. Im betriebsbereiten Ersatzrechner ist die Weiterverarbeitung der Vorergebnisse und die Wirkung seiner Endergebnisse auf die Anlage unterbunden. Auf die Gewährleistung eines Synchronlaufs zwischen den beiden Rechnerkanälen wird verzichtet.

Aus der Offenlegungsschrift DE 24 15 307 A ist ein Verfahren zur Synchronisation von mehreren mit identischen Programmen arbeitenden, jedoch asynchron laufenden Prozessrechnern, denen in unregelmäßiger Folge Prozessdaten zur Verarbeitung angeboten werden, bekannt. Mittels einer Durchschalteinrichtung werden die einlaufenden Prozessdaten nur zu diskreten Zeitpunkten zu den Rechnern durchgeschaltet und dort mindestens bis zum nächsten Durchschaltzeitpunkt gespeichert. Dabei wird eine Durchschaltung erst dann vorgenommen, wenn alle Rechner die mit der vorhergehenden Durchschaltung eingegebenen Prozessdaten abgearbeitet haben.

Es ist ein Ziel der Erfindung, ein Verfahren zur Bereitstellung von konsistenten Eingangswerten und ein Mehrprozessorsystem zu verwirklichen, die für alle Recheneinheiten einen einheitlichen Startwert garantieren und die keine spezielle Anpassung an die Zahl der angeschlossenen Recheneinheiten benötigen.

Dieses Ziel wird mit einem Verfahren und einem Prozessorsystem erreicht, wie sie in den unabhängigen Patentansprüchen definiert sind. Vorteilhafte Weiterbildungen der Erfindung sind Gegenstand der Unteransprüche.

Da die Recheneinheiten, welche die redundanten Berechnungen durchführen, ihren Startwert jeweils von demselben Speicher auslesen und während des Auslesens eine Veränderung des Speicherinhalts verhindert wird, also ein Überschreiben des gespeicherten Werts unterbunden wird, erhalten alle Recheneinheiten denselben Startwert für auszuführende Operationen. Durch geringfügig voneinander abweichende Zeitbasen resultierende unterschiedliche Zugriffszeitpunkte können sich nicht auswirken.

Das Prozessorsystem funktioniert unabhängig von der Zahl der angeschlossenen Recheneinheiten. Es ist beliebig skalierbar. Aufwendige Abgleichmechanismen auf Prozessorebene sind nicht notwendig.

Vorzugsweise wird die Dauer des "Einfrierens" des Speichers durch eine separate Logikschaltung eingestellt.

Bevorzugtes Anwendungsgebiet der Erfindung sind sicherheitsrelevante Mehrprozessorsysteme in Kraftfahrzeugen. Insbesondere eignet sich die Erfindung für den Einsatz im Rahmen eines elektromechanischen Bremssystems (brake by wire) und einer elektromechanischen Lenkung (steer by wire).

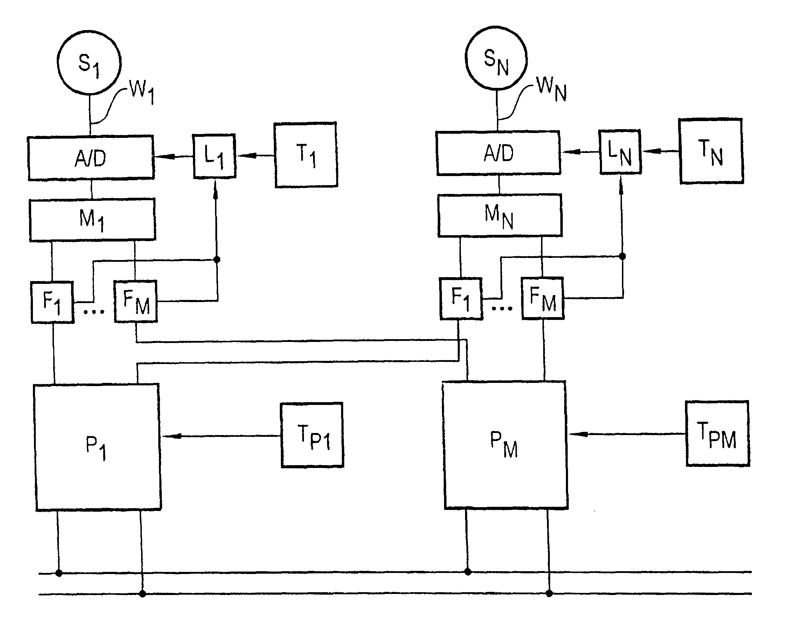

Weitere Merkmale, Vorteile und Anwendungsmöglichkeiten der Erfindung ergeben sich aus der Beschreibung eines Ausführungsbeispiels in Verbindung mit der Zeichnung.

Die Figur zeigt ein an einen Datenbus angeschlossenes, synchrones Mehrprozessorsystem, das Bestandteil eines elektromechanischen Bremssystems ist.

Das Prozessorsystem weist eine Mehrzahl von parallel angeschlossenen Prozessoren oder Recheneinheiten P₁ bis P_{M} auf, von denen beispielhaft zwei Recheneinheiten dargestellt sind. Die Recheneinheiten sind an einen TTP-Bus angeschlossen. Die Prozessoren werden synchron mit derselben Taktfrequenz betrieben. Jedoch weist jeder Prozessor eine eigene Zeitbasis oder einen eigenen Taktgeber T_{P1} bis T_{PM} auf. Dadurch wird vermieden, dass der Ausfall eines gemeinsamen Taktgebers das gesamte Prozessorsystem lahm legt (single point of failure). Allerdings sind hierdurch geringe zeitliche Abweichungen zwischen den Recheneinheiten P₁ bis P_{M} bedingt. Die Synchronisierung der Recheneinheiten wird durch das Bus-Protokoll TTP (time triggered protocol) mit einer gewissen Präzision gewährleistet. Hierbei lassen sich Werte unter 100µs erreichen.

Die von den Recheneinheiten ermittelten Ausgabewerte werden einer Mehrheitsentscheidung unterworfen. Die Validierung oder Zusammenfassung der Ausgabewerte kann von einer externen Einheit vorgenommen werden, die mit den Recheneinheiten über den Datenbus verbunden ist.

Die Recheneinheiten werden von mehreren Signalgebern oder Sensoren S₁ bis S_{N} mit Führungsgrößen oder Eingangswerten w₁ bis w_{N} versorgt. Die Sensoren S₁ bis S_{N} können unterschiedliche Sensoren sein, die unterschiedliche Sensorprinzipien nutzen. Der Sensor S₁ misst den Weg eines Bremspedals, und der Sensor S_{N} misst die Kraft, mit der ein Fahrzeugführer ein Bremspedal betätigt. Die von den Sensoren erfassten Werte werden jeweils mittels eines Analog-/Digitalwandlers in digitale Werte umgesetzt.

Jedem Signalgeber oder Sensor S₁ bis S_{N} ist ein eigener Schreib-Lese-Speicher M₁ bis M_{N} zugeordnet. In den jeweiligen Speicher werden zyklisch die digitalen Eingangswerte oder Eingangssignale eingelesen. Die vorhergehenden Eingangswerte werden dabei überschrieben.

Jedem Speicher M₁ bis M_{N} ist jeweils ein Taktgeber T₁ bis T_{N} und eine Logikschaltung L₁ bis L_{N} zugeordnet.

Das sequentielle Einlesen der Eingangwerte w₁ bis w_{N} in die Speicher M₁ bis M_{N} wird durch einen von den Taktgebern T₁ bis T_{N} vorgegebenen Takt gesteuert. Dieser beträgt in diesem Beispiel 1 kHz. Ein Einlesen in einen Speicher und somit ein Überschreiben des betreffenden Speicherinhalts erfolgt allerdings nur, wenn dies nicht von der betreffenden Logikschaltung L₁ bis L_{N} unterbunden wird.

Eine Unterbrechung des Einschreibens von Eingangwerten w₁ bis w_{N} in die Speicher M₁ bis M_{N}, das heisst ein Einfrieren der Speicher wird durch Unterbrechungsschaltungen F₁ bis F_{M} angestoßen. Pro Speicher M₁ bis M_{N} sind jeweils so viele Unterbrechungsschaltungen F₁ bis F_{M} vorgesehen, wie das Prozessorsystem auf die Speicher zugreifende Recheneinheiten P₁ bis P_{M} aufweist.

Die Unterbrechungsschaltungen F₁ bis F_{M} sind derart zwischen der jeweiligen Recheneinheit P₁, P_{M} und dem zugehörigen Speicher M₁, M_{N} geschaltet, dass eine Ausleseanforderung an den von der Recheneinheit ausgewählten Speicher zugleich dafür sorgt, dass ein Überschreiben des gegenwärtigen Inhalts des betreffenden Speichers solange unterbunden wird, bis bei korrekter Synchronisierung alle Recheneinheiten diesen Speicher ausgelesen haben. Zu diesem Zweck ist jede Unterbrechungsschaltung F₁ bis F_{M} mit der zugehörigen Logikschaltung verbunden. Die Unterbrechungsschaltung ist vorteilhafterweise mit einer Steuerleitung der zugehörigen Recheneinheit verbunden.

Bei einer Ausleseanforderung durch eine Recheneinheit gibt die Unterbrechungsschaltungen F₁, F_{M} ein Signal an die zugehörige Logikschaltung L₁, L_{N} aus. Die Logikschaltung verhindert daraufhin für einen Zeitraum oder eine Zeitdauer Δ_{F}, die der maximal erwartbaren Abweichung der Taktgeber oder Zeitbasen T_{P1} bis T_{PM} der Recheneinheiten P₁ bis P_{M} entspricht, ein Überschreiben des Speicherinhalts durch neue Eingangswerte w₁, w_{N}. Die Logikschaltung gibt während dieses Zeitraums kein Taktsignal an den A/D-Wandler weiter, so dass kein neues Signal in den Speicher eingeschrieben werden kann.

Werden die Recheneinheiten P₁ bis P_{M} jeweils mit 20 MHz getaktet, so beträgt ein typischer Wert für die Unterbrechungszeit oder Zeitdauer Δ_{F} in dem beschriebenen System etwa 100µs bis 500µs. Hierbei sind die Präzision der Synchronisierung der Recheneinheiten über das Bussystem und die Auslesedauer zu berücksichtigen.

Die Unterbrechungsschaltung F₁, F_{M} verzögert die Weiterleitung der Ausleseanforderung an den zugehörigen Speicher M₁, M_{N} um eine vordefinierte Zeitdauer, die mindestens der für das Einfrieren des Speichers notwendigen Zeit entspricht. Der erste Zugriff einer der Recheneinheiten kann daher erst dann erfolgen, wenn der Speicher "eingefroren" ist

Ein neues Einlesen eines Eingangswerts in den Speicher kann erst wieder erfolgen, nachdem die letzte Recheneinheit auf den Speicher zugegriffen hat und die von dieser Recheneinheit ausgelöste Unterbrechungszeit Δ_{F} verstrichen ist. Damit erhalten alle auf den Speicher zugreifenden Recheneinheiten jeweils denselben Startwert für ihre Berechnungen.

Um zu verhindern, dass von einer Recheneinheit P₁, P_{M} fehlerhafterweise ständig wiederholte oder fortdauernde Ausleseanforderungen eine Erneuerung des Speicherinhalts der Speicher M₁ bis M_{N} verhindert, kann die Unterbrechungsschaltung F₁, F_{M} zusätzlich eine Plausibilitätsprüfung bezüglich der Ausleseanforderungen durchführen. Im einfachsten Fall wird eine zeitliche Begrenzung der an die Unterbrechungsschaltung weitergeleiteten Ausleseanforderungen mit einem Zeitglied erreicht, das beispielsweise mit Hilfe eines Kondensators realisiert wird. Das Zeitglied sollte so eingestellt werden, dass nach Ablauf des Zeitraums Δ_{F} ein neues Unterbinden des Uperschreibens erst nach Ablauf eines neuen Arbeitstakts des Taktgebers T₁, T_{N} erfolgen kann.

Bei einem Defekt der Logikschaltung L₁; L_{N} wird ein Überschreiben des zugehörigen Speichers M₁, M_{N} dauerhaft unterbunden. Damit werden inkonsistente Startwerte verhindert. Es wird hierbei in Kauf genommen, dass die Signale des zugehörigen Sensors nicht mehr verarbeitet werden können.

Durch das vorgestellte Verfahren wird zuverlässig verhindert, dass wahrend des zeitlich geringfügig versetzten Auslesens des Speichers durch verschiedene Recheneinheiten ein neuer Eingangswert in den Speicher geschrieben wird und somit die Recheneinheiten unterschiedliche Startwerte für ihre Berechnungen erhalten.

## Patentansprüche

1. Verfahren zur Bereitstellung von konsistenten Eingangswerten für mehrere Recheneinheiten (P₁; P_{M}) mit den Schritten:
- eine Abfolge von Eingangswerten (w₁; w_{N}) wird sequentiell in einen Speicher (M₁; M_{N}) gespeichert, wobei jeder Abfolge von Eingangswerten (w₁; w_{N}) ein Speicher (M₁; M_{N}) zugeordnet ist,
- ein Uberschreiben der im Speicher (M₁; M_{N}) gespeicherten Eingangswerte wird für einen Zeitraum Δ_{F} unterbunden, der wenigstens so groß ist wie die zu erwartende Zeitdifferenz zwischen den Zeitbasen (T_{P1} bis T_{PM}) der Recheneinheiten (P₁; P_{M}), wenn eine Recheneinheit auf den Speicher (M₁; M_{N}) zugrerft,
- wenigstens eine weitere Recheneinheit greift innerhalb des Zeitraums Δ_{F} auf den Speicher (M₁; M_{N}) zu, so dass die Recheneiriheiten denselben Eingangswert (w₁; w_{N}) vom Speicher (M₁; M_{N}) einlesen.

2. Verfahren nach dem vorhergehenden Anspruch, **dadurch gekennzeichnet, dass** bei einer Ausleseanforderung zunächst das Uberschreiben der im Speicher (M₁; M_{N}) gespeicherten Eingangswerte (w₁; w_{N}) unterbunden wird und erst danach mit dem Auslesen des Speichers (M₁; M_{N}) begonnen wird.

3. Verfahren nach einem der vorhergehenden Ansprüche, **dadurch gekennzeichnet, dass** auf eine Anforderung einer Recheneinheit eine Logikschaltung (L₁; L_{N}) das Überschreiben des Speichers (M₁; M_{N}) unterbindet, und dass die Logikschaltung (L₁; L_{N}) bei einem Defekt ein Überschreiben dauerhaft unterbindet.

4. Verfahren nach einem der vorhergehenden Ansprüche, **dadurch gekennzeichnet, dass** das Überschreiben des Speichers (M₁; M_{N}) nur nach einer erfolgreichen Plausibiltätsprüfung der Ausleseanforderung unterbunden wird.

5. Verfahren nach einem der vorhergehenden Ansprüche, **dadurch gekennzeichnet, dass** das Speichern der Eingangswerte (w₁; w_{N}) von einem Taktgeber (T₁; T_{N}) gesteuert wird, und dass nach dem Unterbinden des Überschreibens und nach Ablauf des Zeitraums Δ_{F} ein neues Unterbinden des Überschreibens durch dieselbe Recheneinheit (P₁; P_{M}) nach Ablauf eines neuen Arbeitstakts des Taktgebers (T₁; T_{N}) erfolgen kann.

6. Mehrprozessorsystem, das aufweist:
- eine Mehrzahl von Recheneinheiten (P₁; P_{M}), die redundante Berechnungen durchführen,
- einen Speicher (M₁; M_{N}), auf den die Mehrzahl von Recheneinheiten (P₁; P_{M}) Zugriff haben, der mit der Mehrzahl von Recheneinheiten (P₁; P_{M}) verbunden ist und der einen Eingangswert (w₁; w_{N}) speichert,
- eine Logikschaltung (L₁; L_{N}), die mit den Recheneinheiten (P₁; P_{M}) verbunden ist und die ein Überschreiben des Speichers (M₁; M_{N}) für einen Zeitraum Δ_{F} unterbindet, der wenigstens so groß ist wie die zu erwartende Zeitdifferenz zwischen den Zeitbasen (T_{P1}; T_{PM}) der Recheneinheiten (P₁; P_{M}), wenn eine Recheneinheit (P₁; P_{M}) auf den Speicher (M₁; M_{N}) zugreift.

7. Prozessorsystem nach dem vorhergehenden Anspruch, **dadurch gekennzeichnet, dass** eine Mehrzahl von Eingangswerten (w₁; w_{M}) mit jeweils einem Speicher (M₁; M_{N}) verbunden sind, und jeder Speicher (M₁; M_{N}) mit der Mehrzahl der Recheneinheiten (P₁; P_{M}) verbunden ist.

8. Prozessorsystem nach einem der vorhergehenden auf ein Prozessorsystem gerichteten Ansprüche, **dadurch gekennzeichnet, dass** jedem Prozessor (P₁; P_{M}) pro Speicher (M₁; M_{N}) eine Unterbrechungsschaltung (F₁; F_{M}) zugeordnet ist.

## Claims

1. Method for providing consistent input values for multiple processing units (P₁; P_{M}) comprising the steps:
- a sequence of input values (w₁; w_{N}) is sequentially stored in a memory (M₁; M_{N}), a memory (M₁; M_{N}) being assigned to each sequence of input values (wₜ; w_{N}),
- an overwriting of the input values stored in the memory (M₁; M_{N}) is prevented for a time period Δ_{F} which is at least as great as the time difference to be expected between the time bases (T_{P1} to T_{PM}) of the processing units (P₁; P_{M}) when a processing unit accesses the memory (M₁; M_{N}),
- at least one further processing unit accesses the memory (M₁; M_{N}) within the time period Δ_{F}, with the result that the processing units read in the same input value (w₁; w_{N}) from the memory (M₁; M_{N}).

2. Method according to the preceding claim, **characterised in that** when a readout request is submitted the overwriting of the input values (w₁; w_{N}) stored in the memory (M₁; M_{N}) is initially inhibited and only thereafter does the readout of the memory (M₁; M_{N}) begin.

3. Method according to one of the preceding claims, **characterised in that** upon a request by a processing unit a logic circuit (L₁; L_{N}) inhibits the overwriting of the memory (M₁; M_{N}) and that the logic circuit (L₁; L_{N}) permanently inhibits an overwriting if there is a defect.

4. Method according to one of the preceding claims, **characterised in that** the overwriting of the memory (M₁; M_{N}) is inhibited only after a successful validity check on the readout request.

5. Method according to one of the preceding claims, **characterised in that** the storing of the input values (w₁; w_{N}) is controlled by a clock generator (T₁; T_{N}) and that following the inhibition of the overwriting and after the time period Δ_{F} has elapsed, a new inhibition of the overwriting by the same processing unit (P₁; P_{M}) can take place after a new clock pulse of the clock generator (T₁; T_{N}) has expired.

6. Multiprocessor system comprising:
- a plurality of processing units (P₁; P_{M}) which perform redundant calculations,
- a memory (M₁; M_{N}) to which the plurality of processing units (P₁; P_{M}) have access, which is connected to the plurality of processing units (P₁; P_{M}) and which stores an input value (w₁; w_{N}),
- a logic circuit (L₁; L_{N}) which is connected to the processing units (P₁; P_{M}) and which inhibits an overwriting of the memory (M₁; M_{N}) for a time period Δ_{F} which is at least as great as the time difference to be expected between the time bases (T_{P1}; T_{PM}) of the processing units (P₁; P_{M}) when a processing unit (P₁; P_{M}) accesses the memory (M₁; M_{N}).

7. Processor system according to the preceding claim, **characterised in that** each of a plurality of input values (w₁; w_{N}) is connected to a memory (M₁; M_{N}) and each memory (M₁; M_{N}) is connected to the plurality of the processing units (P₁; P_{M}).

8. Processor system according to one of the preceding claims related to a processor system, **characterised in that** an interrupt circuit (F₁; F_{M}) is assigned to each processor (P₁; P_{M}) per memory (M₁; M_{N}).

## Revendications

1. Procédé pour la fourniture de valeurs d'entrée consistantes pour plusieurs unités de calcul (P₁; P_{M}), comportant les étapes suivantes:
- une suite de valeurs d'entrée (w₁; w_{N}) est mise en mémoire de façon séquentielle dans une mémoire (M₁; M_{N}), chaque suite de valeurs d'entrée (w₁; w_{N}) étant associée à une mémoire (M₁; M_{N}),
- une surcharge des valeurs d'entrée mises en mémoire dans la mémoire (M₁; M_{N}) est interrompue pour une durée Δ_{F,} qui est au moins aussi grande que l'intervalle de temps à attendre entre les bases de temps (T_{P1} à T_{PM}) des unités de calcul (P₁; P_{M}) si une unité de calcul accède à la mémoire (M₁; M_{N}),
- au moins une autre unité de calcul accède, à l'intérieur de l'intervalle Δ_{F} à la mémoire (M₁; M_{N}), de telle façon que les unités de calcul inscrivent en mémoire la même valeur d'entrée (w1; wN) provenant de la mémoire (M₁; M_{N}).

2. Procédé suivant la revendication précédente, **caractérisé en ce que**, dans le cas d'une demande de lecture, la surcharge des valeurs d'entrée (w₁; w_{N}) mémorisées dans la mémoire (M₁; M_{N}) est d'abord arrêtée, puis on commence seulement ensuite la lecture de la mémoire (M₁; M_{N}).

3. Procédé suivant l'une des revendications précédentes, **caractérisé en ce qu'**à une demande d'une unité de calcul, un circuit logique (L₁; L_{N}) interrompt la surcharge de la mémoire (M₁; M_{N}) et **en ce que** le circuit logique (L₁; L_{N}) interrompt, de façon durable, en cas de défaut, toute surcharge.

4. Procédé suivant l'une des revendications précédentes, **caractérisé en ce que** la surcharge de la mémoire (M₁; M_{N}) est interrompue seulement après un contrôle de vraisemblance positif de la demande de lecture.

5. Procédé suivant l'une des revendications précédentes, **caractérisé en ce que** la mise en mémoire des valeurs d'entrée (w₁; w_{N}) est commandée par un générateur d'impulsions (T₁; T_{N}), et **en ce qu'**après l'interruption de la surcharge et après écoulement de la durée Δ_{F}, peut être exécutée une nouvelle interruption de la surcharge par la même unité de calcul (P₁; P_{N}), après écoulement d'une nouvelle impulsion de travail donnée par le générateur d'impulsions (T₁; T_{N}).

6. Système à plusieurs microprocesseurs, qui présente:
- une multiplicité d'unités de calcul (P₁; P_{M}), qui exécutent des calculs redondants,
- une mémoire (M₁; M_{N}), sur laquelle la multiplicité d'unités de calcul (P₁; P_{M}) ont un accès qui est lié à la multiplicité d'unités de calcul (P₁; P_{M}), et qui met en mémoire une valeur d'entrée (w₁; w_{N}),
- un circuit logique (L₁; L_{N}), qui est lié aux unités de calcul (P₁; P_{M}), et qui interrompt une surcharge de la mémoire (M₁; M_{N}) pour un intervalle de temps Δ_{F}, qui est au moins aussi grand que l'intervalle de temps à attendre entre les bases de temps (TP1; TPM) des unités de calcul (P₁; P_{M}), si une unité de calcul (P₁; P_{M}) accède à la mémoire (M₁; M_{N}).

7. Système de processeurs suivant la revendication précédente, **caractérisé en ce qu'**une multiplicité de valeurs d'entrée (w₁; w_{N}) sont chaque fois reliées à une mémoire (M₁; M_{N}), et **en ce que** chaque mémoire (M₁; M_{N}) est reliée à une multiplicité d'unités de calcul (P₁; P_{M}).

8. Système de processeurs suivant l'une des revendications précédentes concernant un système de processeurs, **caractérisé en ce qu'**à chaque processeur (P₁; P_{M}) par mémoire (M₁; M_{N}), est associé un circuit d'interruption (F₁; F_{M}).
